# EUROPÄISCHE PATENTSCHRIFT

(11) **EP 0 767 906 B1**
(45) Veröffentlichungstag und Bekanntmachung des Hinweises auf die Patenterteilung: **04.08.1999**
(21) Anmeldenummer: 95924333.8
(22) Anmeldetag: 29.06.1995
(51) Int. Cl.: G01N 27/407

(54) **YOTENTIOMETRISCHER CO2-SENSOR MIT OFFENER REFERENZELEKTRODE AUF TITANAT-UND STANNAT-BASIS**
YOTENTIOMETRIC CO2 SENSOR WITH A TITANATE AND STANNATE-BASED OPEN REFERENCE ELECTRODE
DETECTEUR POTENTIOMETRIQUE DE CO2 A ELECTRODE DE REFERENCE OUVERTE A BASE DE TITANATE ET DE STANNATE

(30) Priorität: 29.06.1994 DE 4422800
(43) Veröffentlichungstag der Anmeldung: 16.04.1997
(73) Patentinhaber: Max-Planck-Gesellschaft zur Förderung der Wissenschaften e.V. Berlin, 80539 München (DE)
(72) Erfinder: MAIER, Joachim, D-75446 Wiernsheim (DE); SITTE, Werner, A-8044 Graz (AT); HOLZINGER, Michael, A-9300 St. Veit an der Glan (AT)
(74) Vertreter: Weiss, Wolfgang, Dipl.-Chem. Dr.
(86) Internationale Anmeldenummer: EP9502525
(87) Internationale Veröffentlichungsnummer: WO9600895

(56) Entgegenhaltungen:
- EP-A- 0 060 944
- EP-A- 0 310 206
- DE-A- 3 905 298
- DE-A- 4 112 301
- GB-A- 2 167 867
- GB-A- 2 186 091
- US-A- 4 505 804

## Beschreibung

Die vorliegende Erfindung betrifft eine galvanische Zelle, die eine Referenzelektrode, eine Meßelektrode und einen ionenleitenden Festelektrolyten enthält sowie die Verwendung der galvanischen Zelle als Sensor zur Bestimmung von Gasen.

Die Verwendung von galvanischen Festelektrolytzellen als Gassensoren, insbesondere als Sauerstoffsensoren, ist seit langem bekannt. Die Realisierung praktisch einsetzbarer Referenzelektroden ist jedoch schwierig. Beim Einsatz von kationenleitenden Festelektrolyten, beispielsweise eines Natriumionenleiters, bedeutet das die Aufrechterhaltung eines definierten Natriumpotentials über große Zeiträume hinweg. Gemäß dem Stand der Technik gelingt das mit Hilfe von metallischem Natrium, das bei den Betriebstemperaturen des Sensors von häufig über 500°C flüssig ist und eine sehr hohe Reaktivität aufweist. Daher ergeben sich bei der Konstruktion einer solchen Elektrode erhebliche Schwierigkeiten, die Elektrodenräume hermetisch voneinander und von der Umgebung zu isolieren. Durch Reaktionen der Natriumschmelze mit dem Dichtungsmaterial oder anderen Komponenten der galvanischen Zelle wird die Stabilität des Sensorsignals beeinträchtigt, oder der Sensor wird mit der Zeit gänzlich zerstört.

Als Alternative wurde in der DE-A-41 12 301.8 vorgeschlagen, Referenzelektroden zu verwenden, die eine Alkalimetallverbindung, insbesondere eine Natriumverbindung in einem multinären Mehrphasengleichgewicht (z.B. binäre Na/Metall-Verbindungen oder ternäre Na/Metall/Oxid-Verbindungen), enthält. Beispiele derartiger Referenzelektroden mit binären Natrium/Metall-Verbindungen sind Na-Sb oder Na-Bi, Beispiele derartiger Referenzelektroden mit ternären Natrium/Metall/Oxid-Verbindungen sind Na-Co-Oxid oder Na-Ni-Oxid. Aufgrund der Giftigkeit der zum Einsatz gelangenden Schwermetallverbindungen erweist sich jedoch die Herstellung dieser Referenzelektrodensysteme als problematisch.

Weiterhin ist bekannt, daß die an der Phasengrenze zwischen dem Festelektrolyten und einem darauf haftenden Edelmetall sich einstellende Metallaktivität die Rolle eines Referenzsystems erfüllt (vgl. Saito und Maruyama, Solid State Ionics 28-30 (1988), 1644). Dabei besteht jedoch leicht die Gefahr, daß wegen der naturgemäß unvollkommenen Trennung von Referenz- und Meßelektrode die Referenz mit dem Meßmedium, beispielsweise CO₂ und O₂, reagiert. Es ist dann nur eine Frage der Zeit, daß die Zellspannung eines solchen Sensors gegen 0 geht und die Referenzelektrode ihre Funktionalität verliert (vgl. Maruyama et al., Solid State Ionics 23 (1987), 107).

Maier und Warhus (J. Chem. Thermodynamics 18 (1986), 309-316) beschreiben thermodynamische Untersuchungen an Na₂ZrO₃ durch elektrochemische Messungen. Hierfür wurde eine elektrochemische Zelle hergestellt, die als Referenzelektrode ein Gemisch aus Natriumzirkonat, Zirkoniumdioxid und metallischem Gold enthält. Diese Referenzelektrode steht über einen Natriumionenleiter in Kontakt mit einer Meßelektrode, die ein Gemisch aus Natriumcarbonat und metallischem Gold enthält. Diese elektrochemische Zelle kann auch als CO₂-Sensor verwendet werden (vgl. z.B. Maier, in: Science and Technology of Fast Ion Conductors, Hrsg. H.L. Tuller und M. Balkanski, Plenum Press, New York (1989), pp. 299; Maier, Solid States Ionics 62 (1993), 105-111). Dieser Sensor auf Zirkonatbasis hat den Vorteil, daß Meßelektrode und Referenzelektrode der Zelle dem gleichen CO₂-Partialdruck ausgesetzt werden können, so daß das erhaltene Signal lediglich vom CO₂, aber nicht vom O₂-Partialdruck abhängig ist. Daher ist eine Versiegelung der Referenzelektrode nicht erforderlich.

Die Patentanmeldung GB-A-2 167 867 beschreibt eine Sonde zur Bestimmung des Lithiumgehalts in einem geschmolzenen Metall, die aus einem Festelektrolyten für Lithium und einem Lithiumreferenzmaterial besteht, wobei der Festelektrolyt das Lithiumreferenzmaterial von dem geschmolzenen Metall trennt und das Lithiumreferenzmaterial mit Luft in Kontakt steht. Eine derartige Sonde ist jedoch aufgrund ihrer Zusammensetzung und ihres Aufbaus zur Messung von Gasen, insbesondere von CO₂, NOₓ und SOₓ nicht geeignet.

Eine Aufgabe der vorliegenden Erfindung ist die Bereitstellung einer galvanischen Zelle, bei der die Nachteile des Standes der Technik mindestens teilweise vermieden werden. Insbesondere sollte die galvanische Zelle einfach herzustellen sein, eine hohe Langzeitstabilität besitzen und eine schnelle Ansprechzeit bei einer Änderung des Partialdrucks des zu messenden Gases besitzen.

Diese Aufgabe wird erfindungsgemäß gelöst durch Bereitstellung einer galvanischen Zelle zur Messung eines Gases, die eine Referenzelektrode (3), eine Meßelektrode (1) und einen ionenleitenden Festelektrolyten (2) enthält, die dadurch gekennzeichnet ist, daß
(i) die Referenzelektrode (3) eine Kombination aus (a) Titandioxid und einem Alkalimetall- oder Erdalkalimetalltitanat oder (b) Zinndioxid und einem Alkalimetall- oder Erdalkalimetallstannat in inniger Vermischung umfaßt, wobei die Referenzelektrode (3) nicht gegenüber dem Meßmedium isoliert ist,
(ii) die Meßelektrode (1) eine mit dem zu messenden Gas in thermodynamischem Gleichgewicht stehende Verbindung enthält, und
(iii) die Referenzelektrode (3) über den ionenleitenden Festelektrolyten (2) in Kontakt mit der Meßelektrode (1) steht.

Überraschenderweise wurde gefunden, daß eine Referenzelektrode aus einer Kombination von Titandioxid (TiO₂) und einem Alkalimetall- oder Erdalkalimetalltitanat bzw. Zinndioxid (SnO₂) und einem Alkalimetall- oder Erdalkalimetallstannat eine gegenüber bekannten Referenzelektroden deutlich geringere Ansprechzeit bei einer Änderung der Konzentration des zu messenden Gases besitzt. Weiterhin ist eine Versiegelung der erfindungsgemäßen Referenzelektrode gegenüber dem Meßmedium nicht erforderlich, die Referenzelektrode kann völlig offen sein, so daß auf diese Weise erhebliche Material- und Herstellungsprobleme vermieden werden können. Daß dies möglich ist, ist auf zwei Kriterien zurückzuführen:
a) Der Sauerstoff selbst bestimmt die Komponentenaktivität auf der Referenzseite und fällt somit aus der Gesamtzellreaktion heraus. Die EMK hängt nicht mehr vom O₂-Partialdruck ab.
b) Die thermodynamische Stabilität der Oxidmischungen ist derart, daß die Referenzseite auch nicht gegen CO₂ empfindlich ist.

Außerdem ist die erfindungsgemäße Referenzelektrode und ein diese Referenzelektrode enthaltender elektrochemischer Sensor thermodynamisch voll definiert, so daß keine Reproduzierbarkeits- und Driftprobleme auftreten.

Das Alkalimetall- oder Erdalkalimetalltitanat in der erfindungsgemäßen Referenzelektrode weist vorzugsweise die Zusammensetzung XₘTiₙO₂ₙ₊₁ auf, wobei X ein Alkalimetallion ist und m gleich 2 ist oder X ein Erdalkalimetallion ist und m gleich 1 ist und n eine natürliche Zahl von 1 bis 20, vorzugsweise von 1 bis 12 und besonders bevorzugt von 3 bis 8 ist. Ein besonders bevorzugtes Alkalimetall- oder Erdalkalimetalltitanat weist die Zusammensetzung XₘTi₆O₁₃ auf. So zeigt eine Kombination von Na₂Ti₆O₁₃ mit TiO₂ in einem CO₂-Sensor bei einer Meßtemperatur von 500 bis 600°C eine Ansprechzeit, die im Bereich von ≤ 1 bis 2 Sekunden liegt.

Das Alkalimetall- oder Erdalkalimetallstannat der erfindungsgemäßen Referenzelektrode weist vorzugsweise die Zusammensetzung XₘSnₙO₂ₙ₊₁ auf, wobei X ein Alkalimetallion ist und m gleich 2 ist oder X ein Erdalkalimetallion ist und m gleich 1 ist und n eine natürliche Zahl von 1 bis 20, vorzugsweise von 1 bis 12 und besonders bevorzugt von 1 bis 5 ist. Besonders bevorzugt weist das Alkalimetall- oder Erdalkalimetallstannat die Zusammensetzung XₘSnO₃ auf.

Das Titanat oder Stannat in der Referenzelektrode kann ein Alkalimetall- oder Erdalkalimetalltitanat oder -stannat, vorzugsweise ein Alkalimetalltitanat oder -stannat sein. Beispiele für geeignete Erdalkalimetalle sind Beryllium, Magnesium, Calcium, Strontium und Barium. Beispiele für geeignete Alkalimetalle sind Lithium, Natrium, Kalium, Rubidium und Cäsium, wobei Lithium, Natrium, Kalium und Rubidium bevorzugt sind. Natrium ist besonders bevorzugt.

Das am meisten bevorzugte Titanat ist Na₂Ti₆O₁₃, und das am meisten bevorzugte Stannat ist Na₂SnO₃.

Die Referenzelektrode der erfindungsgemäßen galvanischen Zelle enthält vorzugsweise weiterhin eine metallische Substanz, die in inniger Vermischung mit den anderen Komponenten, d.h. mit dem Titan- bzw. Zinndioxid und dem Titanat bzw. Stannat, ist. Die metallische Substanz sollte derart beschaffen sein, daß sie bei den Einsatztemperaturen der Referenzelektrode, vorzugsweise 300 bis 800°C, gegenüber den in der Umgebung vorhandenen festen und gasförmigen Substanzen im wesentlichen inert ist. Vorzugsweise wird die metallische Substanz daher aus der Gruppe der Edelmetalle, z.B. Gold, Platin, Osmium, Iridium, Ruthenium, Rhodium und Palladium ausgewählt. Besonders bevorzugt ist die metallische Substanz Gold oder Platin.

Die Komponenten der erfindungsgemäßen Referenzelektrode, d.h. das Metalloxid, das Titanat bzw. Stannat und gegebenenfalls die metallische Substanz liegen in inniger Vermischung vor. Die Herstellung der erfindungsgemäßen Referenzelektrode erfolgt vorzugsweise dadurch, daß man die Komponenten in Pulverform vermischt und die erhaltene Mischung nach bekannten Methoden, z.B. isostatisches Pressen oder Kaltpressen und gegebenenfalls anschließendes Sintern, verpreßt, wobei ein Formkörper, z.B. ein Pellet, erhalten wird.

Die erfindungsgemäße Referenzelektrode enthält das Metalloxid, das Titanat bzw. Stannat und gegebenenfalls die metallische Substanz in Anteilen von vorzugsweise jeweils mindestens 1 Vol.-%, besonders bevorzugt jeweils mindestens 10 Vol.-%. Am meisten bevorzugt enthält die erfindungsgemäße Referenzelektrode die einzelnen Komponenten in jeweils annähernd gleichen Volumenanteilen.

Ein weiterer Gegenstand der vorliegenden Erfindung ist eine galvanische Zelle, insbesondere zur Messung von Gasen, die mindestens eine Referenzelektrode und mindestens eine für die jeweilige Sensorfunktion geeignete Meßelektrode enthält.

Die Referenzelektrode steht dabei vorzugsweise über einem ionenleitenden Festelektrolyten in Kontakt mit der Meßelektrode. Der ionenleitende Festelektrolyt ist vorzugsweise für Alkalimetall- oder Erdalkalimetallionen leitfähig und zwar insbesondere für diejenige Ionenspezies, die auch in der Referenzelektrode enthalten ist. Vorzugsweise ist der Festelektrolyt daher ein Alkalimetallionenleiter, z.B. ein Material auf Basis von Nasicon, Lisicon oder Natrium-beta-Aluminiumoxid. Besonders bevorzugt ist der Festelektrolyt ein Natriumionenleiter. Weiterhin sollte der Ionenleiter bei den Betriebstemperaturen des Sensors im wesentlichen inert sein.

Die Meßelektrode der erfindungsgemäßen galvanischen Zelle enthält eine Verbindung, die mit einem zu messenden Gas in thermodynamischem Gleichgewicht steht. Vorzugsweise ist diese Verbindung eine ionische Verbindung mit einem Alkalimetall- oder Erdalkalimetallkation, das mit dem mobilen Kation des Festelektrolyten identisch ist.

So kann die Meßelektrode beispielsweise zur Messung von CO₂ ein Alkalimetall- oder Erdalkalimetallcarbonat, zur Messung von NOₓ (N₂O, NO, NO₂) ein Alkalimetall- oder Erdalkalimetallnitrat und zur Messung von SOₓ (SO₂, SO₃) ein Alkalimetall- oder Erdalkalimetallsulfat enthalten.

Vorzugsweise ist die erfindungsgemäße galvanische Zelle ein Sensor zur Messung von CO₂, so daß die Meßelektrode ein Alkalimetall- oder Erdalkalimetallcarbonat, vorzugsweise ein Alkalimetallcarbonat und besonders bevorzugt Natriumcarbonat enthält.

Weiterhin enthält die Meßelektrode vorzugsweise eine metallische Substanz, die in inniger Vermischung mit den anderen Komponenten ist. Die metallische Substanz sollte bei den Betriebsbedingungen des Sensors inert sein und wird vorzugsweise aus der Gruppe der Edelmetalle ausgewählt.

Neben der mit dem zu messenden Gas in thermodynamischem Gleichgewicht stehenden Verbindung und der metallischen Substanz kann die Meßelektrode auch noch Anteile eines ionenleitenden Festelektrolyten, vorzugsweise ≤ 10 Vol.-% enthalten.

Das Prinzip des erfindungsgemäßen Sensors beruht darauf, daß die Alkalimetall- oder Erdealkalimetalloxid-Aktivität auf der Referenzseite der Festelektrolytzelle durch die Phasenmischung von Titan- bzw. Zinndioxid/Titanat bzw. Stannat festgehalten wird, die Elementaktivität durch Sauerstoff und nicht durch das Alkali- bzw. Erdalkalimetall selbst fixiert wird und die freie Reaktionsenergie der Zellreaktion: 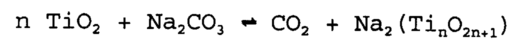 bzw. 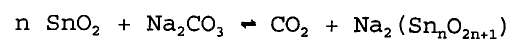 negativ ist, d.h. CO₂ mit TiO₂ bzw. SnO₂ nicht reagiert. Die Na₂O-Aktivität auf der Meßelektrodenseite der Zelle ist über Na₂CO₃ in Abhängigkeit des CO₂-Partialdrucks veränderlich. Als Konsequenz kann die Referenzelektrodenseite der Zelle dem gleichen CO₂-Partialdruck wie die Meßelektrodenseite ausgesetzt werden, da der Sauerstoffpartialdruck aus der Gesamtbilanz herausfällt. Das durch den erfindungsgemäßen Sensor erzeugte Meßsignal ist somit lediglich vom Partialdruck des zu messenden Gases (z.B. CO₂), aber nicht vom Sauerstoffpartialdruck des Meßmediums abhängig, so daß eine Isolierung der Referenzelektrode gegenüber dem Meßmedium nicht erforderlich ist. Außerdem ist der erfindungsgemäße Sensor thermodynamisch voll definiert.

Ein weiterer Gegenstand der vorliegenden Erfindung ist die Verwendung der erfindungsgemäßen Referenzelektrode in einem Sensor, insbesondere zur Messung von Gasen sowie die Verwendung des erfindungsgemäßen Sensors zur Messung von Gasen, um ein vom Sauerstoffpartialdruck des Meßmediums unabhängiges Signal zu liefern. Vorzugsweise werden CO₂, NOₓ oder SOₓ gemessen. Besonders bevorzugt wird CO₂ gemessen.

Die Erfindung soll weiterhin durch das folgende Beispiel in Verbindung mit den Abbildungen 1 bis 7 erläutert werden.

Es zeigen:
- Abb. 1: den schematischen Aufbau eines erfindungsgemäßen Sensors, der eine Referenzelektrode, einen Festelektrolyten und eine Meßelektrode enthält,
- Abb. 2: die Temperaturabhängigkeit des Meßsignals eines erfindungsgemäßen Sensors auf Stannatbasis im Bereich von 680 bis 780°C bei unterschiedlichen CO₂-Konzentrationen,
- Abb. 3: die Abhängigkeit des Meßsignals eines erfindungsgemäßen Sensors auf Stannatbasis vom CO₂-Partialdruck,
- Abb. 4: die Temperaturabhängigkeit des Meßsignals eines erfindungsgemäßen Sensors auf Titanatbasis im Bereich von 300 bis 780°C bei unterschiedlichen CO₂-Konzentrationen,
- Abb. 5: die Abhängigkeit des Meßsignals eines erfindungsgemäßen Sensors auf Titanatbasis vom CO₂-Partialdruck,
- Abb. 6: das Ansprechverhalten des erfindungsgemäßen Sensors auf Titanatbasis auf Änderungen des CO₂-Partialdrucks bei 500°C und
- Abb. 7: das Ansprechverhalten des erfindungsgemäßen Sensors auf Titanatbasis auf Änderungen des CO₂-Partialdrucks bei 600°C.

### Beispiel

### 1. Herstellung von Sensoren

Es wurden folgende Festelektrolytzellen hergestellt:
Pt/CO₂, Na₂CO₃/Na-β"-Al₂O₃/Na₂SnO₃, SnO₂/Pt und
Pt/CO₂, Na₂CO₃/Na-β"-Al₂O₃/Na₂Ti₆O₁₃, TiO₂/Pt

Diese Zellen wurden durch Zusammenfügen von drei Pellets (1 cm Durchmesser, 1 mm Dicke) hergestellt. Das Festelektrolytenpellet wurde aus Na-β"-Aluminiumoxidpulver durch isostatisches Pressen bei 700 MPa hergestellt. Das Meßelektrodenpellet wurde durch Vermischen von gereinigtem Platinpulver und Na₂CO₃-Pulver (Volumenverhältnis 0,5) durch Kaltpressen (400 MPa) und anschließendes Sintern hergestellt. Die Referenzelektrode wurde durch Vermischen von pulverförmigem Platin, Na₂SnO₃ und SnO₂ bzw. Na₂Ti₆O₁₃ und TiO₂ in annähernd gleichen Volumina, Kaltpressen (400 MPa) und anschließendem Sintern hergestellt. Während der Herstellung wurde darauf geachtet, Kontakt mit Feuchtigkeit zu vermeiden.

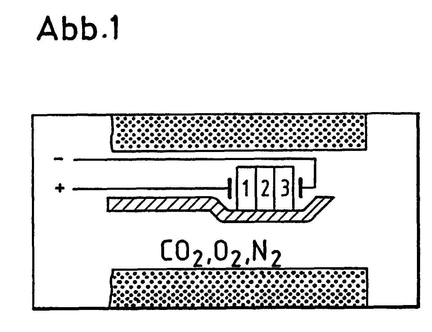

Die Anordnung der aus diesen Pellets hergestellten Festelektrolytzelle ist in Abb. 1 gezeigt. Der Sensor, bestehend aus Meßelektrode (1), Festelektrolyt (2) und Referenzelektrode (3) ist direkt dem Meßmedium ausgesetzt. Die abgegriffene Zellspannung ist bei gegebener Temperatur eine Funktion des CO₂-Partialdrucks.

### 2. Durchführung von Messungen

Das Zellpotential der Sensoren wurde mit Hilfe eines Keithley-Elektrometers (10¹⁴ Ω) aufgezeichnet. Die Temperatur wurde mit einem Pt/Pt + Rh-Thermoelement gemessen.

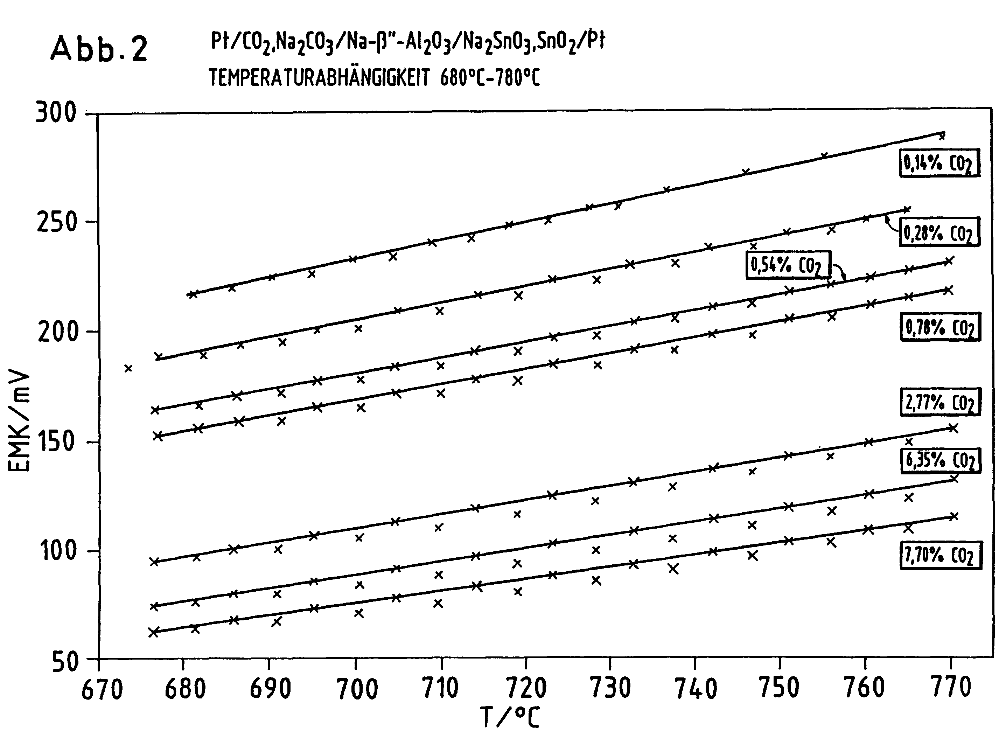

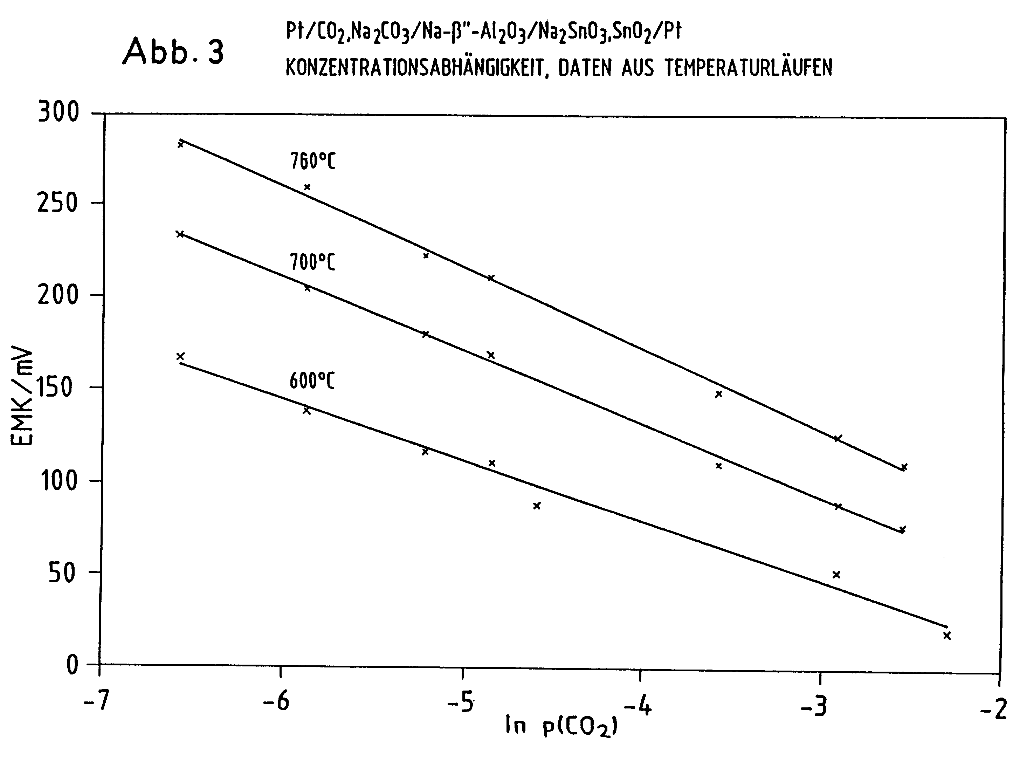

Abb.2 zeigt die Temperaturabhängigkeit der Zellspannung (EMK) des Sensors auf Stannatbasis im Bereich von 680 bis 780°C bei CO₂-Konzentrationen von 0,14 bis 7,70 %. Abb. 3 zeigt die Abhängigkeit des Meßsignals dieses Sensors vom CO₂-Partialdruck bei Meßtemperaturen von 600°C, 700°C und 760°C.

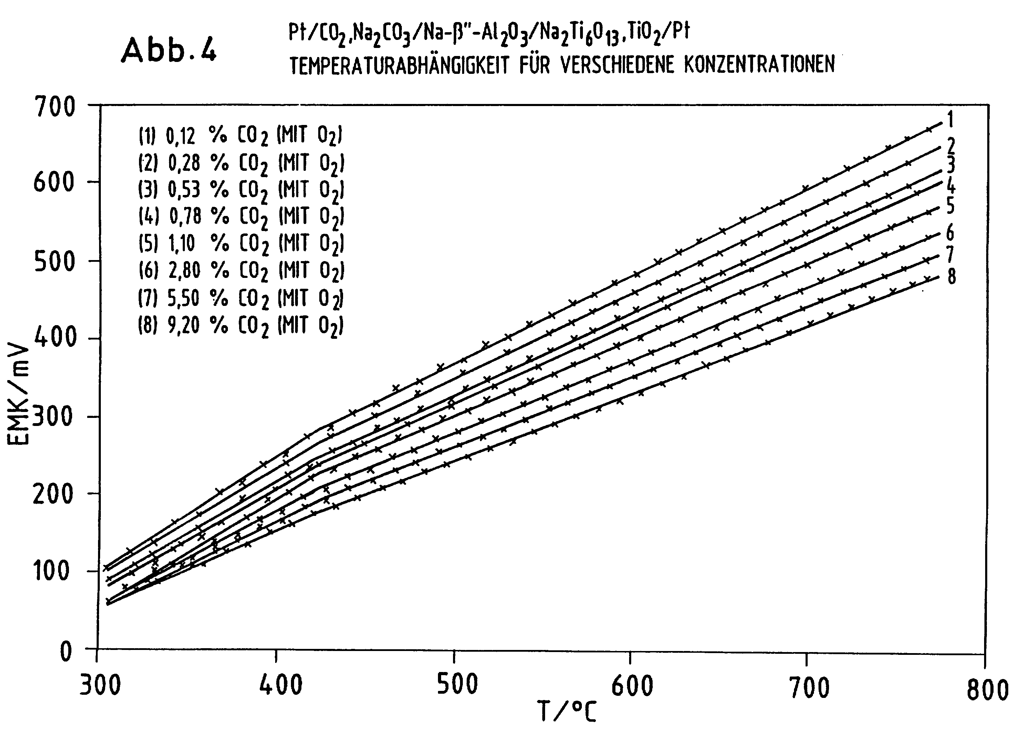

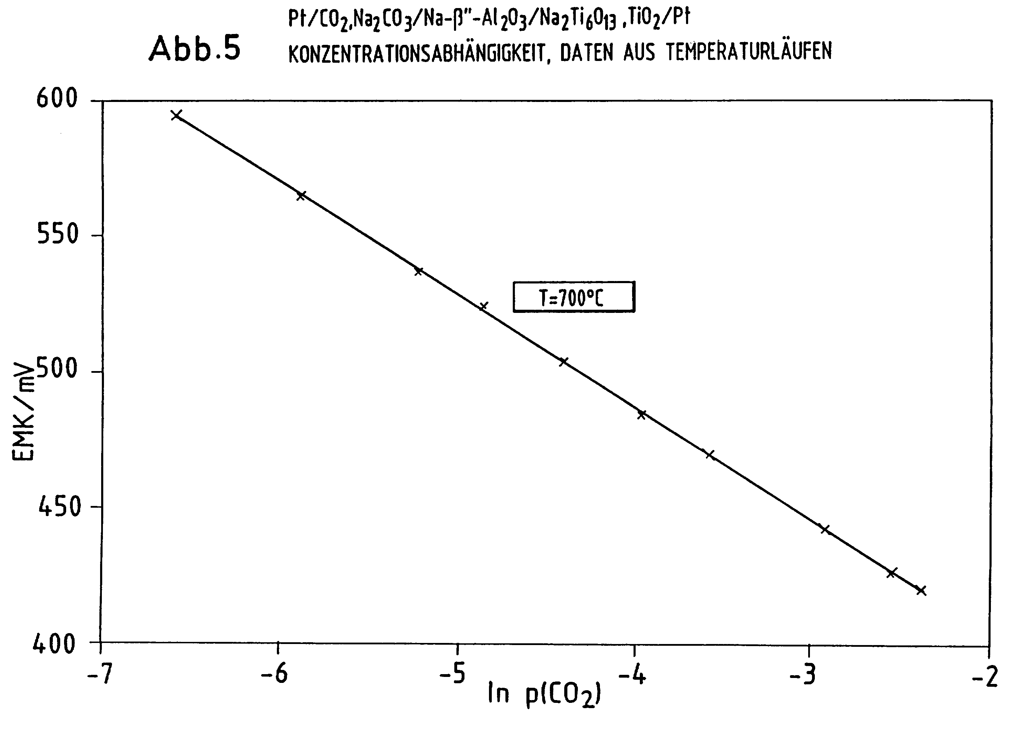

Abb. 4 zeigt die Temperaturabhängigkeit der Zellspannung des Sensors auf Titanatbasis bei CO₂-Konzentrationen von 0,12 bis 9,20 % CO₂. Abb. 5 zeigt die Abhängigkeit des Meßsignals dieses Sensors von der CO₂-Konzentration bei 700°C.

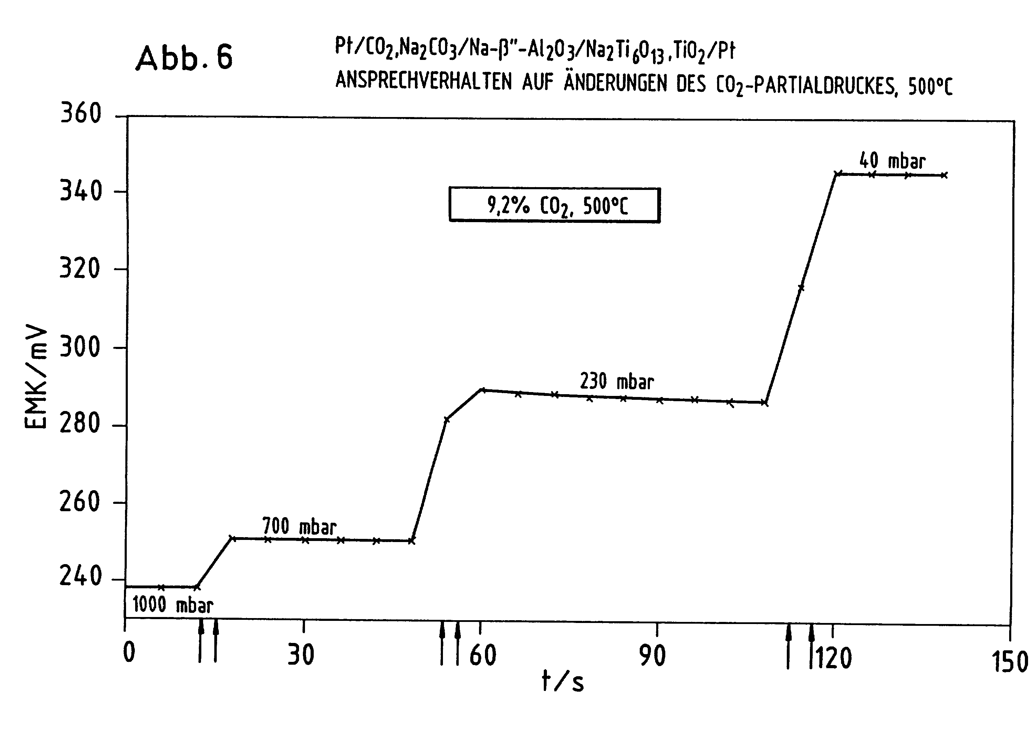

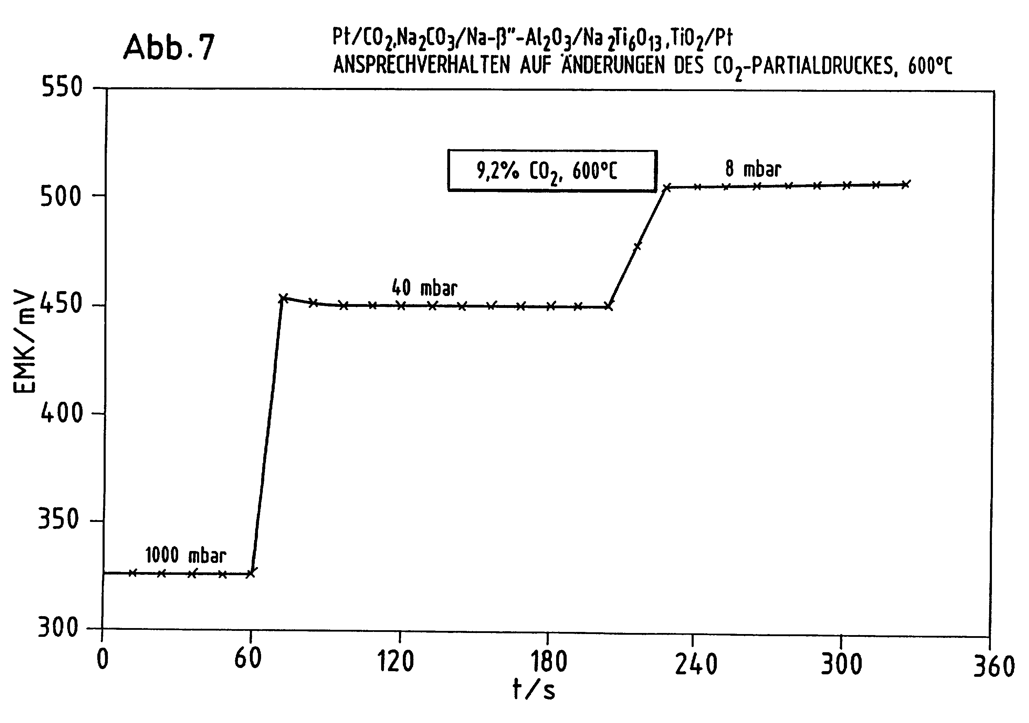

Die Abb. 6 und 7 zeigen das Ansprechverhalten des Sensors auf Titanatbasis auf Änderungen des CO₂-Partialdrucks bei 500°C bzw. 600°C. Die Messungen wurden in Abständen von jeweils 10 Sekunden durchgeführt. Neuere Messungen in geringeren Zeitintervallen ergaben, daß das Ansprechen des Sensors innerhalb einer Zeitspanne von ≤ 2 Sekunden erfolgte.

## Patentansprüche

1. Galvanische Zelle zur Messung eines Gases, die eine Referenzelektrode (3), eine Meßelektrode (1) und einen ionenleitenden Festelektrolyten (2) enthält,
**dadurch gekennzeichnet,**
daß
(i) die Referenzelektrode (3) eine Kombination aus (a) Titandioxid und einem Alkalimetall- oder Erdalkalimetalltitanat oder (b) Zinndioxid und einem Alkalimetall- oder Erdalkalimetallstannat in inniger Vermischung umfaßt, wobei die Referenzelektrode (3) nicht gegenüber dem Meßmedium isoliert ist,
(ii) die Meßelektrode (1) eine mit dem zu messenden Gas in thermodynamischem Gleichgewicht stehende Verbindung enthält, und
(iii) die Referenzelektrode (3) über den ionenleitenden Festelektrolyten (2) in Kontakt mit der Meßelektrode (1) steht.

2. Galvanische Zelle nach Anspruch 1,
**dadurch gekennzeichnet,**
daß das Alkalimetall- oder Erdalkalimetalltitanat der Referenzelektrode die Zusammensetzung XₘTiₙO₂ₙ₊₁ aufweist,
wobei
X ein Alkalimetallion ist und m gleich 2 ist oder X ein Erdalkalimetallion ist und m gleich 1 ist und n eine natürliche Zahl von 1 bis 20 ist.

3. Galvanische Zelle nach Anspruch 2,
**dadurch gekennzeichnet,**
daß das Alkalimetall- oder Erdalkalimetalltitanat die Zusammensetzung XₘTi₆O₁₃ aufweist.

4. Galvanische Zelle nach Anspruch 1,
**dadurch gekennzeichnet,**
daß das Alkalimetall- oder Erdalkalimetallstannat der Referenzelektrode die Zusammensetzung XₘSnₙO₂ₙ₊₁ aufweist, wobei
X ein Alkalimetallion ist und m gleich 2 ist oder X ein Erdalkalimetallion ist und m gleich 1 ist und n eine natürliche Zahl von 1 bis 20 ist.

5. Galvanische Zelle nach Anspruch 4,
**dadurch gekennzeichnet,**
daß das Alkalimetall- oder Erdalkalimetallstannat die Zusammensetzung XₘSnO₃ aufweist.

6. Galvanische Zelle nach einem der Ansprüche 1 bis 5,
**dadurch gekennzeichnet,**
daß das Titanat oder Stannat ein Alkalimetalltitanat oder -stannat ist.

7. Galvanische Zelle nach einem der Ansprüche 1 bis 6,
**dadurch gekennzeichnet,**
daß das Titanat oder Stannat ein Natriumtitanat oder -stannat ist.

8. Galvanische Zelle nach Anspruch 7,
**dadurch gekennzeichnet,**
daß das Titanat Na₂Ti₆O₁₃ ist.

9. Galvanische Zelle nach Anspruch 7,
**dadurch gekennzeichnet,**
daß das Stannat Na₂SnO₃ ist.

10. Galvanische Zelle nach einem der Ansprüche 1 bis 9,
**dadurch gekennzeichnet,**
daß die Referenzelektrode weiterhin eine metallische Substanz enthält, die in inniger Vermischung mit den anderen Komponenten ist.

11. Galvanische Zelle nach Anspruch 10,
**dadurch gekennzeichnet,**
daß die metallische Substanz aus der Gruppe der Edelmetalle ausgewählt ist.

12. Galvanische Zelle nach einem der Ansprüche 1 bis 11,
**dadurch gekennzeichnet,**
daß die Referenzelektrode das Metalloxid, das Titanat bzw. Stannat und gegebenenfalls die metallische Substanz in Anteilen von jeweils mindestens 10 Vol.-% enthält.

13. Galvanische Zelle nach Anspruch 12,
**dadurch gekennzeichnet,**
daß die Referenzelektrode das Metalloxid, das Titanat bzw. Stannat und gegebenenfalls die metallische Substanz in jeweils annähernd gleichen Volumenanteilen enthält.

14. Galvanische Zelle nach einem der Ansprüche 1 bis 13, in der die Referenzelektrode als gepreßter Formkörper vorliegt.

15. Galvanische Zelle nach Anspruch 1,
**dadurch gekennzeichnet,**
daß der ionenleitende Festelektrolyt für Alkalimetall- oder Erdalkalimetallionen leitfähig ist.

16. Galvanische Zelle nach Anspruch 15,
**dadurch gekennzeichnet,**
daß der Festelektrolyt ein Natriumionenleiter ist.

17. Galvanische Zelle nach Anspruch 16,
**dadurch gekennzeichnet**,
daß die Meßelektrode (a) ein Alkalimetall- oder Erdalkalimetallcarbonat, (b) ein Alkalimetall- oder Erdalkalimetallnitrat oder (c) ein Alkalimetall- oder Erdalkalimetallsulfat enthält.

18. Galvanische Zelle nach Anspruch 17 zur Messung von CO₂,
**dadurch gekennzeichnet,**
daß die Meßelektrode ein Alkalimetall- oder Erdalkalimetallcarbonat enthält.

19. Galvanische Zelle nach Anspruch 18,
**dadurch gekennzeichnet,**
daß die Meßelektrode ein Alkalimetallcarbonat, insbesondere Natriumcarbonat enthält.

20. Galvanische Zelle nach einem der Ansprüche 16 bis 19,
**dadurch gekennzeichnet,**
daß die Meßelektrode weiterhin eine metallische Substanz enthält, die in inniger Vermischung mit den anderen Komponenten ist.

21. Galvanische Zelle nach Anspruch 20,
**dadurch gekennzeichnet**,
daß die metallische Substanz aus der Gruppe der Edelmetalle ausgewählt ist.

22. Verwendung einer galvanischen Zelle nach einem der Ansprüche 1 bis 21 zur Messung von Gasen, um ein vom Sauerstoffpartialdruck des Meßmediums unabhängiges Signal zu liefern.

23. Verwendung nach Anspruch 22 zur Messung von CO₂, NOₓ oder SOₓ.

24. Verwendung nach Anspruch 23 zur Messung von CO₂.

## Claims

1. Galvanic cell for measuring a gas which contains a reference electrode (3), a measuring electrode (1) and an ion-conducting solid electrolyte (2),
**wherein**
(i) the reference electrode (3) comprises a combination of (a) titanium dioxide and an alkali-metal or alkaline-earth-metal titanate or (b) tin dioxide and an alkali-metal or alkaline-earth-metal stannate in intimate mixture and the reference electrode (3) is not isolated from the measuring medium,
(ii) the measuring electrode (1) contains a compound which is in thermodynamic equilibrium with the gas to be measured, and
(iii) the reference electrode (3) is in contact with the measuring electrode (1) via the ion-conducting solid electrolyte (2).

2. Galvanic cell as claimed in claim 1,
**wherein**
the alkali-metal or alkaline-earth-metal titanate of the reference electrode has the composition XₘTiₙO₂ₙ₊₁,
in which
X is an alkali-metal ion and m equals 2 or X is an alkaline-earth metal ion and m equals 1, and n is a natural number from 1 to 20.

3. Galvanic cell as claimed in claim 2,
**wherein**
the alkali-metal or alkaline-earth-metal titanate has the composition XₘTi₆O₁₃.

4. Galvanic cell as claimed in claim 1,
**wherein**
the alkali-metal or alkaline-earth-metal stannate of the reference electrode has the composition XₘSnₙO₂ₙ₊₁,
in which
X is an alkali-metal ion and m equals 2 or X is an alkaline-earth-metal ion and m equals 1, and n is a natural number from 1 to 20.

5. Galvanic cell as claimed in claim 4,
**wherein**
the alkali-metal or alkaline-earth-metal stannate has the composition XₘSnO₃.

6. Galvanic cell as claimed in one of claims 1 to 5,
**wherein**
the titanate or stannate is an alkali-metal titanate or stannate.

7. Galvanic cell as claimed in one of claims 1 to 6,
**wherein**
the titanate or stannate is a sodium titanate or sodium stannate.

8. Galvanic cell as claimed in claim 7,
**wherein**
the titanate is Na₂Ti₆O_{13.}

9. Galvanic cell as claimed in claim 7,
**wherein**
the stannate is Na₂SnO₃.

10. Galvanic cell as claimed in one of claims 1 to 9,
**wherein**
the reference electrode also contains a metallic substance which is intimately mixed with the other components.

11. Galvanic cell as claimed in claim 10,
**wherein**
the metallic substance is selected from the group of precious metals.

12. Galvanic cell as claimed in one of claims 1 to 11,
**wherein**
the reference electrode contains the metal oxide, the titanate or stannate and optionally the metallic substance in proportions of at least 10 vol.% of each.

13. Galvanic cell as claimed in claim 12,
**wherein**
the reference electrode contains the metal oxide, the titanate or stannate and optionally the metallic substance in approximately equal proportions by volume.

14. Galvanic cell as claimed in one of claims 1 to 13 in which the reference electrode is in the form of a press-formed piece.

15. Galvanic cell as claimed in claim 1,
**wherein**
the ion-conducting solid electrolyte can conduct alkali-metal ions or alkaline-earth-metal ions.

16. Galvanic cell as claimed in claim 15,
**wherein**
the solid electrolyte is a sodium ion conductor.

17. Galvanic cell as claimed in claim 16,
**wherein**
the measuring electrode contains (a) an alkali-metal or alkaline-earth-metal carbonate, (b) an alkali-metal or alkaline-earth-metal nitrate or (c) an alkali-metal or alkaline-earth-metal sulfate.

18. Galvanic cell as claimed in claim 17 for measuring CO₂,
**wherein**
the measuring electrode contains an alkali-metal or alkaline-earth-metal carbonate.

19. Galvanic cell as claimed in claim 18,
**wherein**
the measuring electrode contains an alkali-metal carbonate, in particular sodium carbonate.

20. Galvanic cell as claimed in one of the claims 16 to 19,
**wherein**
the measuring electrode additionally contains a metallic substance which is mixed intimately with the other components.

21. Galvanic cell as claimed in claim 20,
**wherein**
the metallic substance is selected from the group of precious metals.

22. Use of a galvanic cell as claimed in one of claims 1 to 21 for measuring gases in order to provide a signal which is independent of the partial pressure of oxygen in the measuring medium.

23. Use as claimed in claim 22 for measuring CO₂, NOₓ or SOₓ.

24. Use as claimed in claim 23 for measuring CO₂.

## Revendications

1. Cellule galvanique pour la mesure un gaz, cellule qui renferme une électrode de référence (3), une électrode de mesure (1) et un électrolyte solide (2) conducteur d'ions,
caractérisée en ce que,
(I) l'électrode de référence (3) renferme une combinaison de (a) dioxyde de titane et un titanate des métaux alcalins ou alcalino terreux ou (b) du dioxyde d'étain et un stannate des métaux alcalins ou alcalino terreux, en mélange intime, l'électrode de référence (3) n'étant pas isolée par rapport au milieu ou agent de mesure,
(II) l'électrode de mesure (1) renferme une composition qui se trouve en équilibre thermodynamique avec le gaz à mesurer, et
(III) l'électrode référence (3) est en contact avec l'électrode de mesure (1) par l'intermédiaire des électrolytes solides (2) conducteurs d'ions.

2. Cellule galvanique selon la revendication 1, caractérisée en ce que le titanate de métaux alcalins ou alcalino terreux de l'électrode de référence présente la composition XₘTiₙO₂ₙ₊₁
dans laquelle X est un ion des métaux alcalins et m est égal à 2 ou X est un ion des métaux alcalino terreux et m est égal à 1 et n est un nombre entier naturel de 1 à 20.

3. Cellule galvanique selon la revendication 2, caractérisée en ce que le titanate des métaux alcalins ou des métaux alcalino terreux présente la composition XₘTi₆O₁₃.

4. Cellule galvanique selon la revendication 1, caractérisée en ce que le stannate des métaux alcalins ou des métaux alcalino terreux de l'électrode de référence présente la composition XₘSnₙO₂ₙ₊₁,
dans laquelle X est un ion des métaux alcalins et m est égal à 2 ou X est un ion des métaux alcalino terreux et n est égal à 1 et n est un nombre entier naturel de 1 à 20.

5. Cellule galvanique selon la revendication 4, caractérisée en ce que le stannate des métaux alcalins ou des métaux alcalino terreux présente la composition XₘSn0₃.

6. Cellule galvanique selon l'une des revendications 1 à 5, caractérisée en ce que le titanate ou le stannate est un titanate ou un stannate des métaux alcalins.

7. Cellule galvanique selon l'une des revendications 1 à 6, caractérisée en ce que le titanate ou le stannate est un titanate ou un stannate de sodium.

8. Cellule galvanique selon l'une la revendication 7, caractérisée en ce que le titanate est Na₂SnO₃,

9. Cellule galvanique selon la revendication 7, caractérisée en ce que le stannate est Na₂Sn_{O3}.

10. Cellule galvanique selon l'une des revendications 1 à 9, caractérisée en ce que l'électrode de référence contient de plus une substance métallique qui est en mélange intime avec les autres composants.

11. Cellule galvanique selon la revendication 10, caractérisée en ce que la substance métallique est choisie dans le groupe des métaux précieux.

12. Cellule galvanique selon l'une des revendications 1 à 11, caractérisée en ce que l'électrode de référence contient un oxyde métallique, le titanate ou le stannate éventuellement la substance métallique dans des proportions de respectivement au moins 10% en volume.

13. Cellule galvanique selon la revendication 12, caractérisée en ce que l'électrode de référence contient l'oxyde métallique, le titanate ou le stannate et éventuellement la substance métallique dans chaque fois approximativement les mêmes proportions en volume.

14. Cellule galvanique selon l'une des revendications 1 à 13, dans laquelle l'électrode de référence se présente sous forme de corps de moulage comprimé.

15. Cellule galvanique selon la revendication 1,
caractérisée en ce que
l'électrolyte solide conducteur d'ion est conducteur pour les ions des métaux alcalins ou les ions des métaux alcalino terreux.

16. Cellule galvanique selon la revendication 15, caractérisée en ce que l'électrolyte solide est un conducteur des ions de sodium.

17. Cellule galvanique selon la revendication 16,
caractérisée en ce que
l'électrode de mesure (a) renferme du carbonate des métaux alcalins ou des métaux alcalino terreux, (b) un nitrate des métaux alcalins ou des métaux alcalino terreux ou (c) un sulfate des métaux alcalins ou alcalino terreux.

18. Cellule galvanique selon la revendication 17, pour la mesure de CO₂, caractérisée en ce que l'électrode de mesure renferme un carbonate des métaux alcalins ou des métaux alcalino terreux.

19. Cellule galvanique selon la revendication 18, caractérisée en ce que l'électrode de mesure renferme un carbonate des métaux alcalins, en particulier du carbonate de sodium.

20. Cellule galvanique selon l'une des revendications 16 à 19, caractérisée en ce que l'électrode de mesure contient de plus une substance métallique qui est en mélange intime avec les autres composants.

21. Cellule galvanique selon la revendication 20, caractérisée en ce que la substance métallique est choisie dans le groupe des métaux précieux.

22. Utilisation d'une cellule galvanique selon l'une des revendications 1 à 21 pour la mesure de gaz pour fournir un signal indépendant de la pression partielle de l'oxygène du milieu de mesure.

23. Utilisation selon la revendication 22, pour la mesure de CO₂, NOₓ ou SOₓ.

24. Utilisation selon la revendication 23, pour la mesure de CO₂.
